# EUROPEAN PATENT APPLICATION

(11) **EP 1 060 811 A2**
(43) Date of publication of application: **20.12.2000**
(21) Application number: 00304899.8
(22) Date of filing: 09.06.2000
(51) Int. Cl.: B21D 53/08

(54) **Apparatus for building a heat exchanger core**

(30) Priority: 10.06.1999 GB 9913462
(71) Applicant: Emerson & Renwick Ltd, Accrington, Lancashire BB5 4EF (GB)
(72) Inventor: Hargreaves, Colin, Mirfield, West Yorks WF14 9TH (GB); Topping, John, Wilpshire, Blackburn BB1 9HY (GB)
(74) Representative: Carpenter, David

(57) **Abstract**

A heat exchanger core building apparatus including a generally planar table (10) and first and second comb assemblies (13, 14) associated with the table (10) and spaced apart in lateral alignment with one another on opposite sides respectively of a longitudinally extending axis of the table (10), each comb assembly (13, 14) comprising a lower comb (13b, 14b) and an upper comb (13a, 14a), and each comb being elongate in a direction parallel to said axis and having a plurality of longitudinally spaced fingers extending laterally of the comb towards said axis and defining between them tube receiving slots (15-19, 21-25), tube feed means for delivering tubes (11) to said table such that said tubes (11) are disposed laterally with respect to said axis with their ends received in said first and second comb assemblies (13, 14) respectively, fin assembly feed means for delivering a fin assembly (20) into the gap (15-19, 21-25) between an adjacent pair of tubes (11), and, a comb drive arrangement for operating the upper and lower combs of said first and second comb assemblies (13, 14).

## Description

This invention relates to apparatus for use in the building of cores for heat exchangers, primarily, but not exclusively, heat exchangers for the use as automobile internal combustion engine radiators.

Heat exchanger cores of the kind with which the invention is concerned, comprise a plurality of tubes positioned coplanar and parallel to one another the tubes being spaced apart by respective corrugated sheet metal elements customarily referred to as fin assemblies. A matrix consisting of a predetermined number of tubes and fin assemblies is, in use, secured together by means including first and second header plates having apertures receiving the opposite ends of the tubes respectively. The present invention is concerned primarily with the building of such a matrix from tubes and fin assemblies.

In accordance with the present invention there is provided a heat exchanger core building apparatus including a generally planar table, first and second comb assemblies associated with the table and spaced apart in lateral alignment with one another on opposite sides respectively of a longitudinally extending axis of the table, each comb assembly comprising a lower comb and an upper comb, and each comb being elongate in a direction parallel to said axis and having a plurality of longitudinally spaced fingers extending laterally of the comb towards said axis and defining between them tube receiving slots, tube feed means for delivering tubes to said table such that said tubes are disposed laterally with respect to said axis with their ends received in said first and second comb assemblies respectively, fin assembly feed means for delivering a fin assembly into the gap between an adjacent pair of tubes, and, a comb drive arrangement for operating the upper and lower combs of said first and second comb assemblies in a sequence including:
disengaging said upper combs laterally from the tubes disposed between the first and second comb assemblies,
advancing said lower combs in the direction of said axis by an amount sufficient to advance the tubes engaged with the lower combs along the table in the direction of said axis to align with slots of the upper combs subsequent to those slots in which the tubes were engaged prior to the step of disengaging said upper combs laterally from the tubes,
returning the upper combs laterally inwardly to engage the tube ends in said subsequent slots of the upper combs,
disengaging the lower combs laterally outwardly from the tube ends,
retracting the lower combs axially of said table by an amount equal to the preceding advancement amount, and,
returning the lower combs laterally inwardly towards said axis to engage the tube ends in the slots of the lower combs.

Desirably the first slots of said comb assemblies into which tubes are dispensed from said tube feed means, are wider than the remaining slots of the comb assemblies to facilitate delivery of tubes therein.

Preferably the pitch of the rear edges of the slots of the comb assemblies is constant throughout the length of each assembly not withstanding the increased width of said first slots.

Preferably the corners of the slots at the free ends of the fingers of the laterally moveable combs are rounded or chamfered to facilitate said return lateral movement.

Conveniently each comb assembly includes *n* additional combs intermediate said upper and lower combs, where *n* is an even number, said lower comb and alternate combs above moving in unison and said upper comb and alternate lower combs below moving in unison.

Preferably there is provided a conveyor mechanism receiving the matrix of tubes and fin assemblies discharged from said comb assemblies.

Conveniently said conveyor includes at least first and second spaced abutments between which said matrix is discharged, said abutments being spaced apart by a distance equal to the length of the matrix.

Preferably said tube feed means is arranged to omit to dispense a tube into said comb assemblies after a predetermined number of tubes have been dispensed, said predetermined number being the number of tubes in the desired matrix, so as to provide a space between adjacent matrices in the progression of tubes and fin assemblies discharged from said comb assemblies.

One example of the present invention is illustrated in the accompanying drawings wherein:-
Figure 1 is a diagrammatic representation of part of a heat exchanger core building apparatus,
Figure 2 is a diagrammatic view illustrating the sequence of operation of comb assemblies of the apparatus when constructing a heat exchanger matrix consisting of tubes and fin assemblies, and
Figure 3 is a view similar to Figure 2 of a modification.

The basic structure of a heat exchanger core will be well understood to those skilled in the art, and will be recognised to consist of a plurality of tubes arranged parallel to one another and spaced apart by corrugated fin assemblies. Usually the ends of the tubes are received in apertures in respective header plates which hold the tubes and fin assemblies in predetermined relative positions, and through which the tube ends protrude for engagement in respective header chambers in use. The core building process involves the delivery of tubes and fins to a table in a predetermined sequence, the positioning of the tubes and fin assemblies relative to one another to form a matrix consisting of a predetermined number of tubes, and then the transport of the matrix to a different region of the table where the header plates are engaged with the tubes. The present invention is concerned primarily with the creation of the matrix of tubes and fin assemblies.

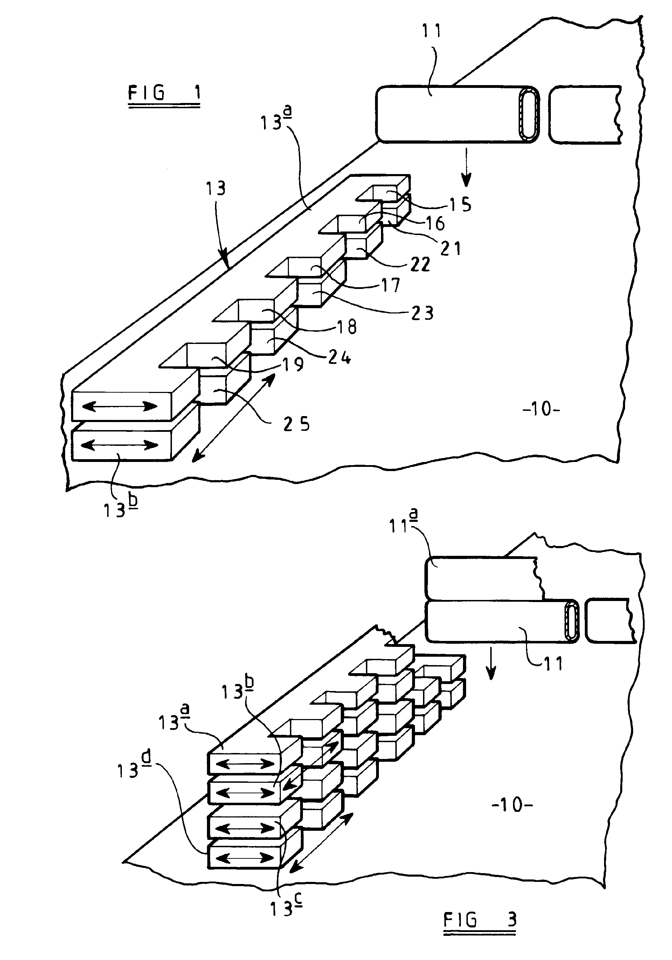

Pre-cut predetermined lengths of tube are stored in a tube stack for delivery singly to the core building table. Similarly preformed lengths of fin assembly 20 are stored in a fin stack again for delivery singly to the table. Figure 1 of the accompanying drawings shows the table diagrammatically at 10. A tube 11 of oval or elliptical cross-section is illustrated being delivered to the table 10 with the longitudinal axis of the tube parallel to the plane of the table 10 (generally horizontal in use) with the tube 11 orientated such that its major plane is normal to the plane of the table 10. The means by which the tubes are dispensed to the table 10 is not of significance to the present invention.

Disposed on the table 10 are first and second comb assemblies 13, 14 (only the comb assembly 13 being illustrated in Figure 1). Each comb assembly 13, 14 includes a pair of elongate combs 13a, 13b, 14a, 14b respectively the combs 13a, 13b and 14a, 14b being substantially identical and the combs 13a, 14a being disposed above the combs 13b, 14b so that it can be said that each comb assembly consists of an upper comb and a lower comb.

For convenience of description the table 10 can be considered to have a longitudinal axis which denotes the direction in which matrix components (tubes and fin assemblies) are moved along the table during construction of a heat exchanger core. The tubes 11 extend at right angles to the longitudinal axis of the table 10, and the comb assemblies 13, 14 are disposed with their elongate combs parallel to the axis of the table 10 and spaced on opposite sides thereof. Each comb 13a, 13b, 14a, 14b includes an elongate spine and a plurality of equally spaced fingers projecting laterally from the spine towards a vertical plane containing the longitudinal axis of the table 10. Thus the fingers of each comb define between them slots having their open ends presented towards the opposite comb assembly. In Figure 1 the slots of the upper comb 13a are indicated by the reference numerals 15 to 19 inclusive while the corresponding slots of the lower comb 13b are indicated by the reference numerals 21 to 25 inclusive. The combs 14a, 14b have similar slots. It is to be understood that it is not essential that the combs have five slots. Combs can be provided with more, or fewer slots as the application dictates.

The two comb assemblies have respective drive arrangements which operate in unison. Each drive arrangement controls the movements of its respective combs 13a, 13b, and 14a, 14b, and any tubes engaged therewith, relative to the table 10. Each drive arrangement can generate movement of its respective combs laterally of the table 10, towards and away from the axis of the table and in addition can generate movement of the lower comb 13b, 14b longitudinally relative to the table through a distance equal to the pitch of the centrelines of the fingers of the combs.

The sequence of operations can be best understood by considering a start-up situation in which no tubes 11 are engaged on the table 10 and both combs of both comb assemblies are in a rest position, the rest position being defined as the position in which the combs are disposed at their closest point towards the axis of the table 10, and the slots of the upper combs overlie the corresponding slots of the lower combs. In this position of the comb assemblies the spacing between the comb assemblies is such that a tube 11 of a predetermined length can fit between the comb assemblies by virtue of its end regions being received in slots of the combs of the comb assemblies. Moreover, the thickness of the combs of the comb assemblies is so chosen in relation to the major diameter of the tube cross-section that a tube end received in a comb assembly will occupy the slot of both an upper and lower comb simultaneously.

With the comb assemblies in their rest position a first tube 11 is dispensed by the tube feed mechanism into the slots 15, 21 at one end of the upper and lower combs of the comb assemblies. The walls of the slots thus support the tube so that it extends transverse to the axis of the table, is parallel to the plane of the table, and has its major plane generally normal to the plane of the table. The drive arrangements of the comb assemblies are then operated in unison, to withdraw the upper combs 13a, 14a from their rest positions, laterally outwardly to disengage the combs 13a, 14a from the ends of the tube 11. The tube however remains supported by the slots 16 of the lower combs 13b, 14b.

While the upper combs are withdrawn laterally from the tubes the lower combs are advanced relative to the table 10, in the direction of the axis of the table 10, through a distance equal to the pitch of the centrelines of the fingers of the combs thus carrying the tube 11 forward on the table by one pitch. Thereafter the upper combs 13a, 14a are returned to their rest positions so that the ends of the tube 11, which are still engaged in the slots 21 of the lower combs, are now simultaneously engaged in the slots 16 of the upper combs.

Next the lower combs 13b, 14a are withdrawn laterally to disengage them from the ends of the tube 11 leaving the tube 11 supported by the upper combs 13a, 14a. While the lower combs 13b, 14b are held in their laterally withdrawn position they are returned axially of the table 10 through a distance equal to the pitch of the centrelines of the fingers and are then returned laterally inwardly to their rest positions so that the ends of the tube 11 are now engaged not only in the slots 16 of the upper combs, but also the slots 22 of the lower combs.

It will be recognised that at this point in the sequence the combs are back in their original rest positions, but the tube 11 has progressed from the slots 15, 21 to the slots 16, 22 and are thus one pitch further down the table than the point at which tubes are fed to the table. At this point in the sequence the next tube 11 is fed into the slots 15, 21 of the upper and lower combs and the sequence of operations is repeated.

The above sequence of movement of the combs to transport the tubes stepwise along the table, is illustrated in Figure 2, arrow 26 in Figure 2 denoting the tube feed station at which tubes are fed in sequence to the slots 15, 21 of the combs. Figures 2A to 2G show the sequence but with more than one tube 11 present.

It will be recognised that the comb assemblies 13, 14 can support five tubes 11 parallel to one another and spaced apart by a predetermined distance. At a point further down the table fin assemblies 20 (shown in Figure 2) are introduced between the tubes. Figure 2 shows a fin assembly insertion point 27 which corresponds, when the combs are in their rest position, to a point between the slots 18, 24 and 19, 25. It will be recognised that if desired the fin assembly insertion point could be earlier since all that is necessary is for the fin assembly 20 to be introduced between a pair of tubes 11. However, physically it may be desirable to arrange for the fin insertion point to be adjacent the far end of the comb assemblies from the tube insertion point simply to accommodate the equipment which is necessary for tube and fin insertion.

It will be recognised that as the sequence progresses tubes are discharged one at a time from the end of the comb assemblies 13, 14 remote from the tube insertion end. In order to ensure that the registration of tubes and intervening fin assemblies is not lost a conveyor system associated with the table 10 (not shown in the drawings) provides a moveable abutment against which the tubes are discharged. In practice after a predetermined number of tubes have been fed in sequential steps by the combs, the tube feed will be arranged to omit one tube so that a pair of slots along the comb assemblies will be empty. The omission of a tube leaves room in the sequence of tubes for the introduction of a further abutment associated with the conveyor so that a predetermined matrix consisting of a selected number of tubes and intervening fin assemblies constructed by the sequential action of the comb assemblies is then carried from the comb assemblies for processing at a station further down the table, or at a remote station, for example the assembly thereto of header plates.

If desired the slots 15, 16 can be wider and/or deeper than the remaining slots to facilitate the introduction of tubes into the slots 15, 16. However, it will be recognised also that the pitch of the rear faces of the slots will desirably be maintained constant throughout the length of the combs to ensure that the tubes are always displaced through a consistent axial distance by the operation of the combs. In order to facilitate engagement of the tube ends in the comb slots as the combs are returned in a lateral direction relative to said axis and to provide for automatic centering of the tube spacing in the event that their longitudinal movement is not through an amount equal to an exact pitch, the ends of the intervening fingers can be chamfered or rounded to provide a lead into the slots.

The provision of the combs in the form of planar components facilitates the positioning and construction of the fin assembly insertion equipment. In practice the thickness of the upper comb, in the fin insertion region may be reduced so that a fin insertion apparatus disposed outwardly of the combs, so as to reduce the overall height of the equipment, needs to accommodate only minimal lifting of the fin assemblies 20 to pass over the combs, before the fin assemblies are inserted between adjacent tubes 11.

It is anticipated that a single drive motor will drive a cam and crank and lever arrangement for operating each comb assembly. Thus the movement and sequencing of the combs 13a, 13b will be under the control of a single drive motor. A separate, single drive motor will drive the combs 14a, 14b through a similar cam and linkage arrangement and there may be a servo connection between the motor of the comb assembly 13 and the motor of the comb assembly 14 to ensure that the comb assemblies operate in unison.

Notwithstanding the fact that the first slots 15, 21 may be wider, to accommodate tube insertion, the remaining slots will preferably be of a width sufficiently close to the minor diameter dimension of the tubes 11 that the tubes are located with their major planes substantially vertical.

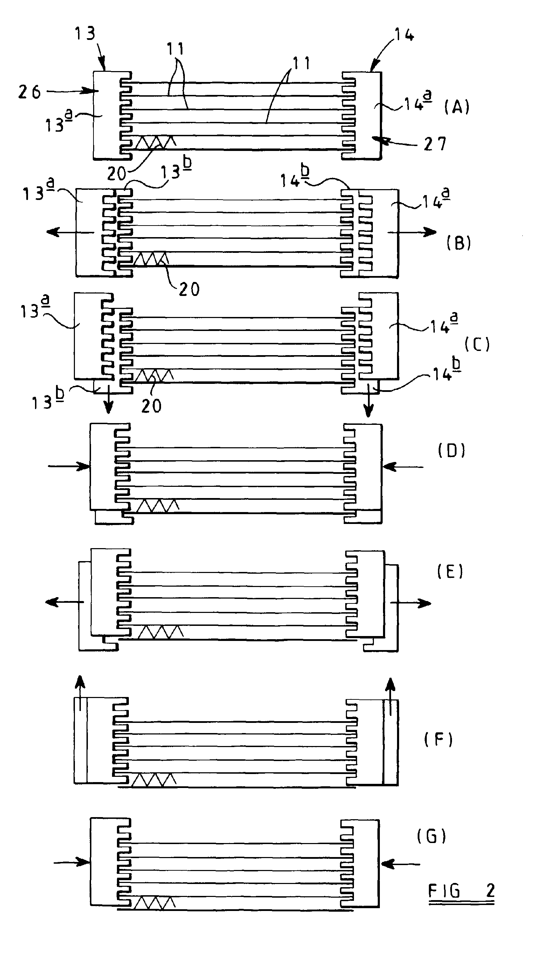

Certain heat exchanger core assemblies require the provision of a second layer of tubes in contact with the tubes 11 and arranged with their major planes coextensive with the major planes of the tubes 11. In order to permit the automated construction of an appropriate matrix the comb assemblies can each be provided with two further combs as shown in Figure 3. Positioned between the comb 13b and the table 10 are two further combs 13c and 13d. All four combs are identical, and the comb 13a and the comb 13c are linked so as to move in unison as are the comb 13b and the comb 13d. The comb assembly 14 of course has similar additional combs 14a and 14d.

The operation of the mechanism of Figure 3 is as described above with reference to Figures 1 and 2 with the exception that in each instance when combs 13a; 14a move then combs 13c; 14a move with them, and when combs 13b; 14b move combs 13d; 14a move with them. When tubes are being delivered into the combs then rather than the tube feed mechanism dispensing a single tube it dispenses two tubes 11, 11a in close proximity to one another so that the tube 11a sits on the tube 11.

It will be recognised that it is not essential that the above described four comb mechanism is used solely for twin tube constructions. For example, the thickness of the combs may be relatively small, and comb assemblies incorporating four combs each may be used to construct single tube matrices if desired. Moreover, each comb assembly could if desired incorporate additional pairs of combs ( making comb assemblies having six, eight or more combs) with vertically alternate combs linked to one another to move in unison.

## Claims

1. A heat exchanger core building apparatus including a generally planar table (10) and characterised by
first and second comb assemblies (13, 14) associated with the table (10) and spaced apart in lateral alignment with one another on opposite sides respectively of a longitudinally extending axis of the table (10), each comb assembly (13, 14) comprising a lower comb (13b, 14b) and an upper comb (13a, 14a), and each comb being elongate in a direction parallel to said axis and having a plurality of longitudinally spaced fingers extending laterally of the comb towards said axis and defining between them tube receiving slots (15-19, 21-25),
tube feed means for delivering tubes (11) to said table such that said tubes (11) are disposed laterally with respect to said axis with their ends received in said first and second comb assemblies (13, 14) respectively,
fin assembly feed means for delivering a fin assembly (20) into the gap (15-19, 21-25) between an adjacent pair of tubes (11), and,
a comb drive arrangement for operating the upper and lower combs of said first and second comb assemblies (13, 14) in a sequence including:
disengaging said upper combs (13a, 14a) laterally from the tubes (11) disposed between the first and second comb assemblies,
advancing said lower combs (13b, 14b) in the direction of said axis by an amount sufficient to advance the tubes (11) engaged with the lower combs (13b, 14b) along the table in the direction of said axis to align with slots of the upper combs (13a, 14a) subsequent to those slots in which the tubes (11) were engaged prior to the step of disengaging said upper combs (13a, 14a) laterally from the tubes,
returning the upper combs (13a, 14a) laterally inwardly to engage the tube ends in said subsequent slots of the upper combs,
disengaging the lower combs (13b, 14b) laterally outwardly from the tube ends,
retracting the lower combs (13b, 14b) axially of said table (10) by an amount equal to the preceding advancement amount, and,
returning the lower combs (13b, 14b) laterally inwardly towards said axis to engage the tube ends in the slots of the lower combs (13b, 14b).

2. A heat exchanger core building apparatus as claimed in claim 1 characterised in that the first slots of said comb assemblies into which tubes are dispensed from said tube feed means, are wider than the remaining slots of the comb assemblies to facilitate delivery of tubes therein.

3. A heat exchanger core building apparatus as claimed in claim 2 characterised in that the pitch of the rear edges of the slots of the comb assemblies is constant throughout the length of each assembly not withstanding the increased width of said first slots.

4. A heat exchanger core building apparatus as claimed in any one of claims 1 to 3 characterised in that the corners of the slots at the free ends of the fingers of the laterally moveable combs are rounded or chamfered to facilitate said return lateral movement.

5. A heat exchanger core building apparatus as claimed in any one of claims 1 to 4 characterised in that each comb assembly includes *n* additional combs intermediate said upper and lower combs, where *n* is an even number, said lower comb and alternate combs above moving in unison and said upper comb and alternate lower combs below moving in unison.

6. A heat exchanger core building apparatus as claimed in any one of claims 1 to 5 characterised by a conveyor mechanism receiving the matrix of tubes and fin assemblies discharged from said comb assemblies.

7. A heat exchanger core building apparatus as claimed in claim 6 characterised in that said conveyor includes at least first and second spaced abutments between which said matrix is discharged, said abutments being spaced apart by a distance equal to the length of the matrix.

8. A heat exchanger core building apparatus as claimed in any one of claims 1 to 7 characterised in that said tube feed means is arranged to omit to dispense a tube into said comb assemblies after a predetermined number of tubes have been dispensed, said predetermined number being the number of tubes in the desired matrix, so as to provide a space between adjacent matrices in the progression of tubes and fin assemblies discharged from said comb assemblies.
